# EUROPEAN PATENT APPLICATION

(11) **EP 0 865 090 A1**
(43) Date of publication of application: **16.09.1998**
(21) Application number: 96939322.2
(22) Date of filing: 28.11.1996
(51) Int. Cl.: H01M 4/26, H01M 4/62

(54) **ELECTRODE FOR CELL**

(30) Priority: 28.11.1995 JP 309074/95; 05.06.1996 JP 143021/96; 25.11.1996 JP 313794/96
(71) Applicant: FURUKAWA DENCHI KABUSHIKI KAISHA, Yokohama-shi, Kanagawa 240 (JP)
(72) Inventor: KATO, Hitoshi Iwakijigyosho Furukawa Denchi, machi, Iwaki-shi Fukushima 972 (JP); SHIRAKAWA, Ryotomo Iwakijigyosho Furukawa Denchi, machi, Iwaki-shi Fukushima 972 (JP)
(74) Representative: Modiano, Guido, Dr.-Ing.
(86) International application number: JP9603490
(87) International publication number: WO9720356

(57) **Abstract**

In an electrode for battery according to the present invention, admixture for electrode, which is an admixture of powdered active material such as nickel hydroxide powder or hydrogen absorbing alloy powder, thickener, binder and the like, is carried on a conductive substrate. Grains of the powdered active material are mutually bonded by silane coupling agent. Alternatively, the surface of the conductive substrate is coated with a film of silane coupling agent, and the admixture for electrode and the conductive substrate are bonded through the intermediary of that film.

## Description

### Technical Field

The present invention relates to an electrode for battery which is used as a positive and/or a negative electrode in a closed alkaline secondary battery such as a nickel-zinc secondary battery, a nickel-cadmium battery and a nickel-hydrogen secondary battery, and more specifically to an electrode for battery wherein admixture for electrode, which has powdered active material as a main constituent and is carried on a conductive substrate, adheres to the conductive substrate securely, therefore flaking of the admixture for electrode at the time of charge and discharge is suppressed, so that the battery exhibits high capacity retention for a long time and has good cycle life characteristics.

### Background Art

For example, a nickel-hydrogen secondary battery, of which practical use as a power source for various electric and electronic apparatuses is developing rapidly, is a non-polluting and high-capacity battery. The nickel-hydrogen secondary battery operates using hydrogen absorbing alloy as active material for negative electrode. More specifically, a nickel electrode, in which nickel hydroxide powder as active material for positive electrode is carried on a conductive substrate, is used as a positive electrode, and a hydrogen absorbing alloy electrode, in which hydrogen absorbing alloy powder, electrochemically absorbing and desorbing hydrogen, is carried on a conductive substrate, is used as a negative electrode. Those positive and negative electrodes are contained in an armoring can together with predetermined alkaline electrolyte, and the battery has closed structure as a whole.

As a nickel electrode, a sintered nickel electrode and a non-sintered nickel electrode are available. The non-sintered nickel electrode is thought more advantageous, since the non-sintered nickel electrode makes it possible to raise filling density of active material, to raise capacity of an electrode and to lower production cost.

The non-sintered nickel electrode is generally produced as follows:

Predetermined quantities of nickel hydroxide powder as active material, aqueous solution of thickener prepared by dissolving thickener in water, and if required, powdered conductive material and binder are mixed to prepare active admixture paste. A predetermined quantity of that admixture paste is applied to a conductive substrate such as a foam nickel sheet having three-dimensional network structure, so that voids of the conductive substrate is filled with the admixture paste and at the same time the admixture paste adheres to the surface of the conductive substrate in the form of a layer. Then, drying and rolling are performed in succession.

Here, thickener dissolved in water covers surfaces of grains of powder constituents of the admixture paste, thereby serving as surface active agent for realizing homogenious dispersion of the powder constituents. Cellulose type polymer such as carboxymethylcellulose, methylcellulose, hydroxyethylcellulose and ethylcellulose, and synthetic high polymer such as ethyleneglycol, polyethyleneglycol, propyleneglycol, polyvinylalcohol and polyacrylate soda are used generally.

Powdered conductive material is used to raise current collecting capacity of the nickel electrode. Nickel powder, carbonylnickel powder, cobalt powder, cobalt oxide powder, cobalt hydroxide powder and the like are used generally.

Binder is used to mutually bond the grains of powder constituents such as the aforementioned nickel hydroxide powder and the powdered conductive material and to have them carried on the current collector. Conventionally, fluoroplastics powder such as polytetrafluoroethylene (PTFE) powder, tetrafluoroethylene hexafluoropropylene copolymer (FEP) powder, tetrafluoroethylene perfluoroalkylvinylether copolymer (PFA) powder, polychlorotrifluoroethylene (PCTFE) powder, polyvinylidene fluoride (PVDF) powder, polyvinyl fluoride powder, ethylene tetrafluoroethylene copolymer (ETFE) powder and ethylene chlorotrifluoroethylene copolymer (ECTFE) powder, powdered fluoro rubber, chloroprene rubber, nitrile rubber, styrene rubber and the like, and powdered polystyrene, nylon and the like are used generally.

In the aforementioned process of production, water constituent of the admixture paste is removed, and dry admixture having nickel hydroxide powder as a main constituent (hereunder referred to as "admixture for electrode") remains in the voids and on the surfaces of the conductive substrate. At the time of rolling, the powdered binder is spread to bond the grains of powder constituents of the admixture for electrode, such as nickel hydroxide powder and powdered conductive material, mutually. Thus, the admixture for electrode is, as a whole, carried in the voids and on the surfaces of the current collector.

If required, the whole conductive substrate is heated to a desired temperature to melt the aforementioned binder, so that the admixture for electrode is carried on the conductive substrate more firmly.

On the other hand, the hydrogen absorbing alloy electrode is produced as follows: Normally, hydrogen absorbing alloy powder having a predetermined grain size, aqueous solution of thickener prepared by dissolving thickener in water as mentioned above, and if required, powdered conductive material are mixed in a predetermined proportion to prepare admixture paste. The admixture paste is applied to a conductive substrate such as a punching nickel sheet so as to adhere to both sides of the conductive substrate in the form of a layer. Then, drying and rolling are performed in succession, so that the grains of hydrogen absorbing alloy powder and powdered conductive material are mutually bonded mechanically, and the admixture for electrode containing those powder constituents is carried on the conductive substrate by adhesive property of contained thickener.

In the aforementioned nickel electrode, when charge and, discharge cycle of the battery is repeated, γ-oxynickelhydroxide, which is an irreversible reaction product, is accumulated on the nickel hydroxide carried on the conductive substrate, so that the nickel hydroxide powder is expanded and deformed. That phenomenon appears outstandingly at the time of boosting charge.

As a result, grains of nickel hydroxide powder, which are subject to stress caused by the aforementioned expansion and deformation of the nickel hydroxide powder, may fall off the admixture for electrode, and/or the admixture for electrode, which has nickel hydroxide powder as a main constituent, may flake off the surface of the conductive substrate. In those cases, the capacity of the nickel electrode is lowered. Moreover, if the nickel hydroxide powder falls off in large quantity and/or the admixture for electrode flakes off in large quantity, it may cause a short cut between the positive and negative electrodes and thereby shorten the cycle life of the battery.

In order to solve the aforementioned problems, there has been proposed a method of making a nickel electrode for use as a positive electrode, wherein, for example, a foam metal is filled with admixture paste having nickel hydroxide powder as a main constituent, then the metal is dried, thereafter pressed, thereafter dipped in suspension containing fluoroplastics (for example, suspension of polytetrafluoroethylene), and thereafter dried (Japanese Patent Preliminary Publication No. Sho 60-131765).

In that method, part of the suspension penetrates into voids of the admixture for electrode and covers the surfaces thereof, thereby bonding the grains of nickel hydroxide powder in some degree. As a result, the aforementioned phenomenon, that is, falling of the grains of nickel hydroxide powder and flaking of the admixture for electrode owing to the stress caused by the expansion and deformation of the nickel hydroxide powder is suppressed in some degree.

Japanese Patent Preliminary Publication No. Hei 4-248265 discloses another method of making a nickel electrode, wherein nickel hydroxide powder having a spherical shape, thickener, water and suspension of polytetrafluoroethylene (PTFE) are kneaded to prepare admixture paste, and a conductive substrate is filled with thus prepared admixture paste. In that method, mutual bonding of grains of nickel hydroxide powder is ensured by polytetrafluoroethylene. However, polytetrafluoroethylene, which is used as binder, has a property that it is fiberized when shear force is applied thereto, for example, at the time of kneading. The fiberization of polytetrafluoroethylene deteriorates filling property of the admixture paste.

On the other hand, in the aforementioned hydrogen absorbing alloy electrode, mutual bonding of grains of hydrogen absorbing alloy powder mainly relies on the adhesive property of the thickener, so that it is not so stable. In that electrode, when charge and discharge cycle of the battery is repeated, the grains of hydrogen absorbing alloy powder carried on the conductive substrate repeat absorbing and desorbing of hydrogen, and at that time the grains repeat expansion and contraction. Owing to the stress caused by the expansion and contraction, the grains of hydrogen absorbing alloy powder tend to be atomized and fall off, and the admixture for electrode carried on the conductive substrate tends to flake off the conductive substrate. That phenomenon appears outstandingly at the time of boosting charge.

In those cases, the capacity of the hydrogen absorbing alloy electrode itself is lowered. Moreover, if the hydrogen absorbing alloy powder falls off in large quantity and/or the admixture for electrode flakes off in large quantity, it may cause a short cut between the positive electrode and the negative electrode (the hydrogen absorbing alloy electrode) and thereby shorten the cycle life of the battery.

Thus, nowadays, it is thought important to raise the mutual bonding of the grains of hydrogen absorbing alloy powder carried on the conductive substrate.

As an attempt to raise the mutual bonding of the grains of hydrogen absorbing alloy powder as well as the mutual bonding of the admixture for electrode and the conductive substrate, a predetermined quantity of polytetrafluoroethylene (PTFE), tetrafluoroethylene hexafluoropropylene copolymer (FEP), tetrafluoroethylene perfluoroalkylvinylether copolymer (PFA), polychlorotrifluoroethylene (PCTFE), polyvinylidene fluoride (PVDF), polyvinyl fluoride, ethylene tetrafluoroethylene copolymer (ETFE) and ethylene chlorotrifluoroethylene copolymer (ECTFE), fluoro rubber, chloroprene rubber, nitrile rubber, styrene rubber, polystyrene, nylon or the like has been added as a binder in preparation of the aforementioned admixture, with a view to utilizing the bonding property of those substances.

However, it has been proved that any of the above mentioned binders loses the bonding property due to the alkaline electrolyte contained in the battery, so that none of them can effectively prevent the falling of the hydrogen absorbing alloy powder and the flaking of the admixture for electrode at the time of boosting charge. Moreover, when those binders are used in large quantity in order to prevent the aforementioned falling and flaking, it causes a problem that current collecting capacity and mechanical strength (flexibility) of the electrode itself are lowered, so that the capacity of the battery can not be maintained for a long time.

### Disclosure of the Invention

An object of the present invention is to provide an electrode for battery wherein grains of powdered active material such as nickel hydroxide powder or hydrogen absorbing alloy powder, which is a main constituent of admixture for electrode, are mutually bonded securely, and the admixture for electrode adheres to a conductive substrate securely, and therefore falling of the powdered active material and flaking of the admixture for electrode are suppressed even when charge and discharge cycle is repeated for a long time, so that the battery using that electrode exhibits high capacity retention for a long time and has good cycle life.

A particular object of the present invention is to provide a nickel electrode having nickel hydroxide powder as a main constituent, and a hydrogen absorbing alloy electrode having hydrogen absorbing alloy powder as a main constituent.

In order to attain the aforementioned objects, the present invention provides an electrode for battery comprising:
admixture for electrode, which is an admixture of powdered active material and binder, carried on a conductive substrate;
grains of the powdered active material being mutually bonded by the binder, wherein
the binder contains at least a silane coupling agent. (The electrode for battery of this type will be hereunder referred to as "first electrode".)

The present invention also provides an electrode for battery comprising:
admixture for electrode, which is an admixture of powdered active material and binder, carried on a conductive substrate;
grains of the powdered active material being mutually bonded by the binder, wherein
a film of silane coupling agent is formed on the surface of the conductive substrate. (The electrode for battery of this type will be hereunder referred to as "second electrode".)

The present invention provides the aforementioned first and second electrodes in particular in the form of nickel hydroxide electrodes which respectively use nickel hydroxide powder as the respective powdered active material, and in the form of hydrogen absorbing alloy electrodes which respectively use hydrogen absorbing alloy powder as the respective powdered active material.

### Brief Description of the Drawings

Figure is a graph showing cycle-life characteristics of batteries.

### Best Mode of Carrying out the Invention

The first and second electrodes for battery provided by the present invention have, like the conventional electrodes for battery, such structure that admixture for electrode, which is an admixture of powdered active material such as nickel hydroxide powder or hydrogen absorbing alloy powder and organic substances such as the aforementioned thickener and binder, is carried on a conductive substrate.

In the first electrode, silane coupling agent, which will be described later, is mixed with the binder in order to in itself serve as a kind of binder, and grains of the powdered active material, which is a main constituent of the admixture for electrode, are thereby bonded mutually.

In the second electrode, a film of silane coupling agent is formed on the surface of the conductive substrate, and the admixture for electrode and the conductive substrate are mutually bonded securely through the intermediary of that film.

In the case of the first electrode, it is desirable that the silane coupling agent and fluorine-containing resin, which will be described later, are used together as a binder, since it improves the mutual bonding of grains of the powdered active material.

In the case of the second electrode, it is desirable that the silane coupling agent is also mixed with the admixture for electrode, since it can suppress more effectively the falling of the powdered active material and the flaking of the admixture for electrode.

First, the first electrode will be described, taking a case in which it is formed as a nickel electrode.

The nickel electrode as an example of the first electrode of the present invention has, like the conventional nickel electrodes, such structure that admixture for electrode having nickel hydroxide powder as a main constituent is carried on a conductive substrate.

The conductive substrate functions as a current collector. As the conductive substrate, those having three-dimensional structure in which open-pores are formed complicatedly, such as network structure, fibrous structure, felt structure or sponge structure can be used. Those in the form of a planar porous sheet in which a plurality of opens are formed, such as a punching metal sheet, can also be used. Among those conductive substrates, the conductive substrate having three-dimensional network structure is advantageous in that it has a high porosity, so that it allows high filling density of the admixture paste described later. It is desirable that the conductive substrate is made of nickel at least at the surface thereof.

The above mentioned admixture for electrode is made having nickel hydroxide powder as a main constituent. Specifically, the admixture for electrode is made up of nickel hydroxide powder, thickener, fluoroplastics, silane coupling agent, and if required, powdered conductive material.

It is desirable that nickel hydroxide powder has a spherical shape. In that case, shear force applied to, for example, PTFE, which is mixed as fluoroplastics powder, is kept small as disclosed in Japanese Patent Preliminary Publication No. Hei 4-248265, so that the admixture paste can be prepared suppressing the fiberization of PTFE. Therefore, filling property of the admixture paste to be applied to the conductive substrate is not deteriorated. Further, the nickel hydroxide powder should preferably be a nickel hydroxide powder in which zinc is solid soluted, since zinc exposed at the surfaces of grains of nickel hydroxide powder has affinity for fluoroplastics, and thereby improves the mutual bonding of grains of nickel hydroxide powder.

Thus, in the present invention, nickel hydroxide powder having a spherical shape and being a solid solution of zinc is particularly desirable.

Thickener is a constituent which is mixed when the admixture paste is prepared in the production method described later, and used to give an appropriate viscosity to the admixture paste, thereby helping the admixture paste to permeate and/or adhere to the conductive substrate smoothly.

As the thickener, any of those conventionally used for preparation of the admixture paste can be used. By way of example, cellulose type polymers such as carboxymethylcellulose, methylcellulose, hydroxyethylcellulose and ethylcellulose, glycols such as ethyleneglycol, polyethyleneglycol and propyleneglycol, and synthetic high polymers such as polyvinylalcohol and polyacrylate soda can be mentioned.

It is desirable that the thicker is used in the state of aqueous solution of thickener with a predetermined concentration, prepared in advance by dissolving a predetermined quantity of thickener in water.

As the fluoroplastics, any of those conventionally used for bonding of grains of nickel hydroxide powder and powdered conductive material can be used. By way of example, FEP, PFA, PCTFE, PVDF, ETFE, ECTFE, polyvinyl fluoride, polyethylene chloride trifluoride and the like can be mentioned in addition to the aforementioned PTFE.

The fluoroplastics may be used in the state of dry powder. However, it is desirable to use it in the state of suspension with a predetermined concentration, since it is easier in that case to produce a uniform mixed state of the fluoroplastics and the nickel hydroxide powder.

The silane coupling agent mediates the bonding of the nickel hydroxide powder and the fluoroplastics, thereby improving the mutual bonding of grains of nickel hydroxide powder by the fluoroplastics.

The silane coupling agent has a structural unit represented by the following formula:

X-Si-(OR)₃

wherein X represents an organic functional group and R an alkyl group.

The organic functional group X may be, for example, epoxy group, amino group, vinyl group, mercapto group, chloric radical or the like. The alkyl group R may be, for example, methyl group, ethyl group, isopropyl group, cyclohexyl group, phenyl group or the like.

The silane coupling agent has a property that the functional group X located at one end of its structure reacts and combines with an organic substance, while the -OR (alkoxide group) located at the other end of its structure hydrolyzes in the presence of water.

Therefore, when the aforementioned silane coupling agent is added to a system containing nickel hydroxide powder and fluoroplastics, the functional group X combines with the fluoroplastics, which is an organic substance, while the alkoxide group (-OR) hydrolyzes and combines with the nickel hydroxide powder, which is an inorganic substance. Thus, the silane coupling agent mediates the bonding of the nickel hydroxide powder and the fluoroplastics.

As the silane coupling agent, γ-chloropropyltrimethoxysilane, vinyltrimethoxysilane, β-(3,4-epoxycyclohexyl)trimethoxysilane, γ-gricidoxypropyltrimethoxysilane, γ-mercaptpropyltrimethoxysilane, N-β-(aminoethyl)-γ-aminopropyltrimethoxysilane, γ-aminopropyltrimethoxysilane or the like can be mentioned, by way of example.

Among the above mentioned substances, those of which the functional group X is epoxy group or alkyl group are more slightly soluble in alkaline aqueous solution, for example, aqueous solution of KOH, which is often used as electrolyte for battery, than those of which the functional group X is amino group, vinyl group, mercapto group or chloric group, and do not produce decomposition product. In addition, the former substances show good resistance to oxidation in the presence of oxygen gas produced at the time of charge, and are chemically extremely stable. Thus, the former substances are desirable, since they allow the battery to show good self-discharge characteristics and good cycle life characteristics.

As the silane coupling agent to be used, fluorine-contained silane coupling agent such as (1H, 1H, 2H, 2H-heneicosafluorododecyl) trimethoxysilane, (1H, 1H, 2H, 2H-heneicosafluorododecyl) triethoxysilane, (1H, 1H, 2H, 2H-nonafluorohexyl) dimethoxysilane, (1H, 1H, 2H, 2H-nonafluorohexyl) diethoxysilane, (1H, 1H, 2H, 2H-heptadecafluorodecyl) dimethoxysilane, (1H, 1H, 2H, 2H-heptadecafluorodecyl) trimethoxysilane, (1H, 1H, 2H, 2H-tridecafluorooxyl) trimethoxysilane, (1H, 1H, 2H, 2H-tridecafluorooxyl) triethoxysilane or the like can be mentioned.

Thus, the admixture for electrode in which the aforementioned silane coupling agent mediates the bonding of nickel hydroxide powder and fluoroplastics does not produce decomposition product harmful to cell reaction, and maintains that bonding state for a long time. This means that the mutual bonding of grains of nickel hydroxide powder does not become weaker.

The aforementioned fluorine-contained silane coupling agent is particularly desirable, since it contains, in its molecular, fluorine in the form of -(CF₂)-ₙ, (CF₃)- , so that it has a water repellent property as well as a bonding property. That is, the fluorine-contained silane coupling agent has a water repellent function which is otherwise to be expected in the fluoroplastics as a binder, so that it is no more necessary to add the fluoroplastics at the time of preparing the admixture paste in order to ensure the water repellent property. In addition, the intensity of water repellent property of fluorine-contained silane coupling agent can be controlled by changing the value of n in the -(CF₂)-ₙ. The water repellent property becomes strong when n takes a large value, and becomes weak when n takes a small value.

Further, the fluorine-contained silane coupling agent is also desirable, in that it does not decompose to produce decomposition products such as nitrous acid, nitrate ion, ammonium ion at all, even when it is in the state of over-charge or over-discharge in the alkaline electrolyte, unlike the aforementioned amine-contained silane coupling agent which can not help slightly decomposing to produce those decomposition products in small quantity. Thus, the fluorine-contained silane coupling agent does not cause the deterioration of self discharge characteristic of the battery.

As the powdered conductive material which can be, if required, mixed in addition to the aforementioned four constituents, carbonyl nickel powder, nickel powder, carbon black and graphite powder can be mentioned by way of example.

The nickel electrode described above as an example of the first electrode of the present invention can be produced by the following two methods. First, a first production method will be described hereunder.

Nickel hydroxide powder, water, thickener, fluoroplastics, silane coupling agent, and if required, powdered conductive material are kneaded to prepare admixture paste which is an admixture of inorganic powder and organic substance (kneading process).

As the water for use in the kneading process, those not containing substances harmful to cell reaction are used. For example, distilled water, deionized water or the like can be used.

In the kneading process, silane coupling agent mediates the bonding of nickel hydroxide powder and fluoroplastics in the prepared admixture paste, thereby producing the mutual bonding of grains of nickel hydroxide powder. Owing to the mediating function of silane coupling agent, fluoroplastics adheres to the surfaces of grains of nickel hydroxide powder efficiently, so that a smaller quantity of fluoroplastics is required in the method using silane coupling agent than in the case where the same level of bonding is to be produced without using silane coupling agent, solely with the fluoroplastics. Thus, by use of silane coupling agent, the quantity of fluoroplastics required for mutual bonding of grains of nickel hydroxide powder can be reduced, so that the lowering of capacity, which is caused by covering of the surfaces of grains of nickel hydroxide powder with fluoroplastics, is suppressed.

In the kneading process, mixture proportion of the above mentioned constituents of the admixture paste is so controlled that the prepared admixture paste may have appropriate viscosity, and that the surfaces of grains of nickel hydroxide powder may not be excessively covered with fluoroplastics and silane coupling agent.

For example, when the proportion of water becomes too large, relative quantity of nickel hydroxide powder which serves as active material decreases. In addition, the prepared admixture paste has so large fluidity that it may flow away after it is applied to the conductive substrate in a succeeding process. As a result, the filling density of active material is lowered, so that the capacity of nickel electrode is lowered. On the other hand, when the proportion of water is too small, the admixture paste has so small fluidity that it can not be well applied to permeate nor adhere to the conductive substrate. As a result, an adequate quantity of nickel hydroxide is not carried on the conductive substrate.

When the proportion of fluoroplastics plus silane coupling agent becomes too large, filling property and adhesiveness of the admixture paste are deteriorated, although the mutual bonding of grains of nickel hydroxide powder can be improved. In addition, large parts of surfaces of grains of nickel hydroxide powder become covered with fluoroplastics and silane coupling agent, so that the capacity of nickel electrode is lowered. On the other hand, when the proportion thereof is too small, the mutual bonding of grains of nickel hydroxide powder is lowered.

Thus, the quantities of fluoroplastics and silane coupling agent used in the kneading process are decided in relation to the quantity of nickel hydroxide powder used therein. Generally, the desirable proportion is 0.01 ∼ 5 parts by weight, especially 0.01 ∼ 1 part by weight of fluoroplastics plus silane coupling agent per 100 parts by weight of nickel hydroxide powder. In respect of the proportion of silane coupling agent to fluoroplastics, when the proportion of silane coupling agent is too small, the aforementioned effect of mediation of bonding is lowered. On the other hand, when the proportion thereof is too large, that is not only useless to raise the aforementioned effect of mediation of bonding, but also deteriorates the surface activity of grains of nickel hydroxide powder. The desirable proportion by weight is 0.05 ∼ 100 parts of silane coupling agent per 1 part of fluoroplastics.

Taking the above into consideration, the desirable proportion by weight of the respective constituents to be kneaded is, per 100 parts of nickel hydroxide powder, 0.1 ∼ 1 part of thickener, 30 ∼ 70 parts of water, 0.5 ∼ 3 parts of fluoroplastics, 0.1 ∼ 3 parts of silane coupling agent and 5 ∼ 30 parts of powdered conductive material.

When the fluoroplastics is used in the state of suspension, the concentration of fluoroplastics in that suspension and the quantity of that suspension to be used are so decided that the proportion of fluoroplastics to 100 parts by weight of nickel hydroxide powder may be within the above mentioned range. When the nickel hydroxide powder having a spherical shape is used, it is desirable that the aforementioned concentration and quantity of suspension to be used are so chosen that the proportion of fluoroplastics may be 0.001 ∼ 2 per cent by weight.

Grain sizes of those powder constituents are appropriately chosen in relation to a type of conductive substrate used in a succeeding process and to adhesiveness and filling property of those powder constituents to the conductive substrate. When the grain sizes are too large, adhesiveness and filling property of those powder constituents to the conductive substrate is lowered. When the grain sizes are too small, that makes it difficult in the kneading process to prepare the admixture paste having respective powder constituents uniformly dispersed. Thus, it is desirable to use nickel hydroxide powder, powdered conductive material and fluoroplastics powder having a grain size distribution in a range of 1 ∼ 200 µm, respectively.

The admixture paste prepared in the kneading process is made to be carried on a conductive substrate in a succeeding carrying process.

In the case where the conductive substrate has three-dimensional network structure, pores of that network structure are filled with the admixture paste. Thus the admixture paste is carried on the conductive substrate. In the case where the conductive substrate is in the form of a planar porous sheet, the admixture paste is applied to the surface of the conductive substrate to be engaged in opens thereof. Thus the admixture paste is carried on the conductive substrate in the form of a layer.

The admixture paste applied to permeate or adhere to the conductive substrate is wet. Therefore, in the carrying process, after the admixture paste is applied to permeate or adhere to the conductive substrate, drying is performed. Then, for example, rolling is performed in succession to shape the conductive substrate into an electrode plate having a predetermined thickness.

In the case where PTFE powder is used as the fluoroplastics, grains of PTFE powder get fiberized and intertwined with one another in the course of rolling and shaping which are performed subsequently after the admixture paste is applied to permeate or adhere to the conductive substrate. Therefore, the mutual bonding of grains of nickel hydroxide powder is further increased, and falling thereof is suppressed more effectively.

Next, a second method for producing the nickel electrode, which is an example of the first electrode of the present invention, will be described hereunder.

In the second production method, unlike in the aforementioned kneading process of the first production method, nickel hydroxide powder, water, thickener, and if required, powdered conductive material are kneaded. Fluoroplastics and silane coupling agent are not kneaded at the same time.

Therefore, mutual bonding of grains of nickel hydroxide powder in the admixture paste prepared in the second production method is weaker than that in the first production method. That is, the grains are slightly bonded only by the thickener.

Then, in a carrying process, the admixture paste is applied to permeate or adhere to a conductive substrate, and thus carried thereon. Then, like in the carrying process of the first production method, drying is performed, and rolling is thereafter performed to shape the conductive substrate into a electrode plate having a predetermined thickness.

At the time when the carrying process is finished, grains of nickel hydroxide powder are not securely bonded mutually, since fluoroplastics, which serves as binder, is not contained in the shaped electrode plate.

Thus, in the second production method, after the aforementioned carrying process is finished, the shaped electrode plate is transferred to an applying process, where fluoroplastics and silane coupling agent are further applied to the surface of the electrode plate.

Specifically, silane coupling agent is added to suspension of fluoroplastics, in which the electrode plate which has gone through the carrying process is dipped. Types, quantities and the like of fluoroplastics and silane coupling agent to be dispersed in the suspension are chosen based on the criteria similar to those in the first production method, so that the appropriate mutual bonding of grains of nickel hydroxide powder may be produced and surface activity of grains of nickel hydroxide powder may not be deteriorated.

In the applying process, part of suspension and silane coupling agent penetrates into voids of the admixture for electrode which has been already applied to permeate or adhere to the conductive substrate, and there, silane coupling agent mediates the bonding of fluoroplastics and nickel hydroxide powder. Most part of suspension and silane coupling agent adheres to the surface of the admixture for electrode, thereby enhancing the mutual bonding of grains of nickel hydroxide powder.

It is to be noted that in the second production method, since the drying is performed in the carrying process, water and the like are removed from the admixture paste, so that a plurality of voids are produced in the electrode plate. Then, in the succeeding applying process, suspension and silane coupling agent penetrate into thus produced voids smoothly, so that the mutual bonding of grains of nickel hydroxide powder are improved more effectively.

The nickel electrode as an example of the first electrode of the present invention can be produced by either of the aforementioned first and second production methods.

In the first production method, it is also possible that the admixture paste is prepared with a smaller quantity of fluoroplastics in the kneading process, and then in the carrying process, after the electrode plate is shaped, fluoroplastics is applied to permeate or adhere to the surface of the electrode plate. In that case, silane coupling agent already contained in the admixture for electrode mediates the bonding of nickel hydroxide powder and the fluoroplastics which is newly applied to permeate or adhere to the electrode plate in the aforementioned final process.

It is to be noted that if drying is performed subsequently after the above mention applying process, and rolling is thereafter performed, and if PTFE is used for the fluoroplastics to be applied to the surface of the electrode plate, PTFE gets fiberized, and fibers produced inside the electrode plate and fibers produced at the surface thereof easily get intertwined with each other, so that the mutual bonding of grains of nickel hydroxide powder is further enhanced, and falling thereof is prevented more securely.

Next, the first electrode will be described, taking a case in which it is formed as a hydrogen absorbing alloy electrode.

The hydrogen absorbing alloy electrode as an example of the first electrode of the present invention has, like the conventional hydrogen absorbing alloy electrodes, such structure that admixture paste for electrode having hydrogen absorbing alloy powder as a main constituent is carried on a conductive substrate.

As the conductive substrate, those in the form of a planar porous sheet in which a plurality of opens are formed, such as a punching metal sheet, are preferably used. It is desirable that the conductive substrate is made of nickel at least at the surface thereof.

The above mentioned admixture paste may be prepared by mixing only silane coupling agent with hydrogen absorbing alloy powder having a predetermined grain size. However, it is more desirable that besides silane coupling agent, aqueous solution of thickener and/or fluoroplastics are added to hydrogen absorbing alloy powder to prepare the admixture paste, since in that case, the mutual bonding of grains of hydrogen absorbing alloy powder becomes more secure due to the aforementioned function of silane coupling agent.

It is desirable that hydrogen absorbing alloy powder has a spherical shape. If hydrogen absorbing alloy powder has non-spherical shape, it is difficult to cover the surfaces of grains of hydrogen absorbing alloy powder uniformly with silane coupling agent and/or thickener, so that uniform mutual bonding of grains of hydrogen absorbing alloy powder can not be obtained.

As thickener and fluoroplastics to be used, those mentioned in the case of the aforementioned nickel electrode can be also mentioned in this case. It is desirable that thickener is used in the state of aqueous solution and fluoroplastics is used in the state of suspension.

If required, powdered conductive material, for example, nickel powder, cobalt powder or the like may be further added to prepare the admixture paste.

In the admixture paste, the proportion of silane coupling agent to be added is, for example, when thickener and fluoroplastics are also added, dependent on those proportions of thickener and fluoroplastics. Generally, the desirable proportion is 0.1 ∼ 10 parts by weight of silane coupling agent per 100 parts by weight of hydrogen absorbing alloy powder. When the proportion of silane coupling agent is smaller than 0.1 parts by weight, the mutual bonding of grains of hydrogen absorbing alloy powder is lowered. On the other hand, when the proportion thereof is larger than 10 parts by weight, that is not only useless to enhance the mutual bonding, but also allows the surfaces of grains of hydrogen absorbing alloy powder to be covered, thereby deteriorating the surface activity thereof. As a result, the capacity of battery is lowered.

After the admixture paste is prepared, a conductive substrate is dipped in the admixture paste and then pulled up, so that a predetermined quantity of the admixture paste may adhere to the conductive substrate. Then, drying is performed, and for example, rolling is thereafter performed. Finally, the conductive substrate is cut into predetermined shape and sized thus the hydrogen absorbing alloy electrode as an example of the first electrode of the present invention is provided.

Next, the second electrode of the present invention will be described.

Also the second electrode has, like the conventional electrodes for battery, such structure that admixture for electrode having powdered conductive material, such as nickel hydroxide powder (in the case of a positive electrode of nickel-hydrogen secondary battery) or hydrogen absorbing alloy powder (in the case of a negative electrode of nickel-hydrogen secondary battery), as a main constituent is carried on a conductive substrate. What is characteristic of the second electrode of the present invention is that the surface of the conductive substrate is covered with a film of the aforementioned silane coupling agent.

When the admixture paste, which is an admixture of powdered active material, thickener and binder, is applied to permeate the conductive substrate of which the surface is covered with a film of silane coupling agent, the functional group X of the silane coupling agent combines with the aforementioned organic substance, while the alkoxide group (-OR) thereof hydrolyzes and combines with inorganic powder constituent of the admixture paste and with the conductive substrate. Thus, the silane coupling agent mediates the bonding of the admixture paste for electrode and the conductive substrate.

In order to produce the second electrode, first, a film of silane coupling agent is formed to cover the surface of the conductive substrate. Specifically, the conductive substrate is dipped in silane coupling agent.

In that process, part of alkoxide group of silane coupling agent hydrolyzes and forms a film which is combined with the surface of the conductive substrate. On the other hand, the functional group X of the silane coupling agent is waiting for organic substance to combine with.

It is desirable that a desired quantity of fluoroplastics is mixed therein, since in that case, the prepared admixture for paste has water repellent property. Further, it is effective that interfacial active agent such as carboxymethylcellulose is mixed therein, since in that case, dispersed state of silane coupling agent is improved, and therefore a film of silane coupling agent can be formed uniformly on the surface of the conductive substrate, so that the flaking of the admixture for electrode is prevented more effectively.

It is desirable that a film of silane coupling agent is formed with a thickness of 10 ∼ 300 Å. When the thickness thereof is less than 10 Å, the aforementioned effect of bonding the admixture paste and the conductive substrate does not sufficiently appear. When the thickness thereof is more than 300 Å, conductivity of an electrode as a whole, therefore, current collecting capacity thereof is lowered, so that battery performance is lowered. The desirable thickness of the film of silane coupling agent is, more specifically, 30 ∼ 150 Å.

Next, a predetermined quantity of admixture paste is applied to permeate or adhere to the conductive substrate.

Thickener and binder in the admixture paste combine with the functional group X of silane coupling agent of the film already formed, while powdered active material in the admixture paste combines with the alkoxide group, that is, the remaining group of silane coupling agent. Thus, the admixture paste is bonded with the surface of the conductive substrate through the intermediary of that film.

It is useful that a desired quantity of silane coupling agent is also mixed at the time of preparing the admixture paste. In that case, silane coupling agent mixed in the admixture paste not only produces mutual bonding of grains of respective powder constituents of the admixture paste, but also combines with silane coupling agent which has already formed the film. This serves to prevent the falling of respective powder constituents of the admixture paste and the flaking of the admixture paste off the conductive substrate.

It is desirable that the powdered active material which is a main constituent of the admixture paste has a spherical, oval or elliptic shape.

In that case, filling property and adhesiveness of the admixture paste to the conductive substrate are improved. Further, the admixture paste has a greater tendency to produce uniform contact with the film of silane coupling agent, so that the mutual bonding of the admixture paste and the conductive substrate is improved.

### Examples 1 ∼ 6 according to the present invention and Comparative Examples 1 and 2

### (1) Production of nickel electrode

Examples of the first electrode of the present invention were produced as follows.

100 parts by weight of nickel hydroxide powder having a spherical shape and grain size distribution of 1 ∼ 200 µm and containing 7 % by weight of solid solution of zinc, 10 parts by weight of carbonyl nickel powder having grain size distribution of 0.5 ∼ 10 µm, 5 parts by weight of cobalt monoxide powder having grain size distribution of 0.5 ∼ 30 µm, 50 parts by weight of aqueous solution of carboxylmethylcellulose having a concentration of 2 % by weight (1 part by weight in terms of carboxylmethylcellulose), 1 part by weight of suspension of PTFE having a concentration of 60 % by weight (0.6 parts by weight in terms of PTFE powder, PTFE powder having a grain size of 0.1 ∼ 10µm) and 0.1 parts by weight of γ-gricidoxypropyltrimethoxysilane were kneaded to prepare admixture paste. First, carboxylmethylcellulose and suspension of PTFE were kneaded, and thereafter the other constituents were added thereto and kneaded.

The admixture paste was applied to permeate a sponge-like nickel sheet having a porosity of 95 %. Then, drying was performed at a temperature of 150 °C for 20 minutes, and rolling was thereafter performed with a pressure of 4 ton/cm².

Thus obtained electrode plate was next dipped in the same suspension as used in the kneading process (1 part by weight in terms of PTFE powder per 100 parts by weight of nickel hydroxide powder) and pulled up therefrom. Then, drying was performed at a temperature of 120 °C for 20 minutes, and rolling was thereafter performed with a pressure of 6 ton/cm², thereby obtaining a nickel electrode having a thickness of 0.7 mm. This will be referred to as a nickel electrode of Example 1.

Another example of nickel electrode was produced in the same way as in the case of the nickel electrode of Example 1, except that nickel hydroxide powder contained 3 % by weight of solid solution of zinc, that 0.3 parts by weight of γ-gricidoxypropyltrimethoxysilane was used, that 0.5 parts by weight of suspension of PTFE having a concentration of 60 % by weight (0.3 parts by weight in terms of PTFE powder) was used in the kneading process, and that 2.5 parts by weight of suspension of PTFE having a concentration of 60 % by weight (1.5 parts by weight in terms of PTFE powder) was used in the applying process. This will be referred to as a nickel electrode of Example 2.

Another example of nickel electrode was produced in the same way as in the case of the nickel electrode of Example 1, except that nickel hydroxide powder contained 10 % by weight of solid solution of zinc, and that 2.5 parts by weight of suspension of PTFE having a concentration of 60 % by weight (1.5 parts by weight in terms of PTFE powder) was used in the applying process. This will be referred to as a nickel electrode of Example 3.

Another example of nickel electrode was produced in the same way as in the case of the nickel electrode of Example 1, except that nickel hydroxide powder contained 5 % by weight of solid solution of zinc, and that 0.2 parts by weight of suspension of PTFE having a concentration of 60 % by weight (0.12 parts by weight in terms of PTFE powder) was used in the kneading process. This will be referred to as a nickel electrode of Example 4.

Another example of nickel electrode was produced in the same way as in the case of the nickel electrode of Example 1, except that nickel hydroxide powder contained 5 % by weight of solid solution of zinc, that neither suspension of PTFE nor silane coupling agent was used in the kneading process, and that the electrode plate was dipped in the admixture of 1 part by weight of suspension of PTFE having a concentration of 60 % by weight (0.6 parts by weight in terms of PTFE powder) and 0.1 parts by weight of γ-gricidoxypropyltrimethoxysilane in the applying process. This will be referred to as a nickel electrode of Example 5.

Another example of nickel electrode was produced in the same way as in the case of the nickel electrode of Example 1, except that suspension of PTFE and silane coupling agent were used in the applying process. This will be referred to as a nickel electrode of Example 6.

Another example of nickel electrode was produced in the same way as in the case of the nickel electrode of Example 1, except that (1H, 1H, 2H, 2H-heneicosafluorododecyle) trimethoxysilane was used as silane hydroxide coupling agent, and that PTFE was not used at all. This will be referred to as a nickel electrode of Example 7.

Another example of nickel electrode was produced in the same way as in the case of the nickel electrode of Example 1, except that nickel hydroxide powder having a non-spherical shape and not containing solid solution of zinc was used, that silane coupling agent was not used, that 5 parts by weight of suspension of PTFE having a concentration of 60 % by weight (3 parts by weight in terms of PTFE powder) was used in the kneading process, and the applying process was not performed. This will be referred to as a nickel electrode of Comparative Example 1.

Another example of nickel electrode was produced in the same way as in the case of the nickel electrode of Example 1, except that nickel hydroxide powder having a non-spherical shape and not containing solid solution of zinc was used, that neither suspension of PTFE nor silane coupling agent was not used in the kneading process, and that only 2.5 parts by weight of suspension of PTFE having a concentration of 60 % by weight (1.5 parts by weight in terms of PTFE powder) was used in the applying process. This will be referred to as a nickel electrode of Comparative Example 2.

### (2) Assembling of battery

Hydrogen absorbing alloy having composition of MmNi_{3.2}Co_{1.0}Al_{0.2}Mn_{0.4} (where Mm represents misch metal) was ground into powder having an average grain size of 65 µm. 100 parts by weight of that hydrogen absorbing alloy powder, 0.15 parts by weight of nickel powder, 0.03 parts by weight of polyvinylidene fluoride and 0.2 parts by weight of aqueous solution of carboxylmethylcellulose having a concentration of 1% were mixed to prepare admixture paste.

The prepared admixture paste was applied to both sides of a punching nickel sheet (open diameter: 1.5mm, rate of open area: 38 %, thickness: 0.07mm). Then, drying was performed at a temperature of 80 °C for 60 minutes, and rolling was thereafter performed with a pressure of 3 ton/cm², so that a hydrogen absorbing alloy electrode (negative electrode) having a thickness of 0.35 mm was obtained.

A separator to be mounted in a battery was produced as follows:

FT-310 (trade name of polyolefine non-woven fabric produced by Japan Vilene Co., Ltd.) was washed with water, thereby to remove nonionic surface active agent attached to the surface thereof. After dried, the non-woven fabric was dipped in hot concentrated sulfuric acid having a concentration of 95 % (temperature: 100 ° C) for 30 minutes for sulfonation treatment of the surface thereof. After that sulfonation treatment, the non-woven fabric was washed with running water thoroughly, and dried at a temperature of 80 ° C for 1 hour. Then, the non-woven fabric was dipped in aqueous solution of sodium hydroxide having a concentration of 1 % for 5 minutes, and further washed with water.

FT-773 (trade name of polyamide resin non-woven fabric produced by Japan Vilene Co., Ltd.) was washed with water, and the FT-310 having been treated as mentioned above was laid on each surface of the FT-773. Then, the thermo-compression treatment was performed at a temperature of 80 °C for 1 hour applying a pressure of 3kg/m² to the whole of the FT-310 and FT-773, thereby integrating them into a separator.

The separator was interposed between one of the aforementioned nickel electrodes and the negative electrode, thereby to form a group of electrode. The group of electrode was placed in a nickel-plated stainless steel can, then electrolyte composed of 0.6 N NaOH, 1N LiOH and 7N KOH was poured in the can, and then the can was sealed. Thus a nickel-hydrogen secondary battery in square shape having rated capacity of 900 mAh was assembled.

### (3) Investigation of characteristics of batteries

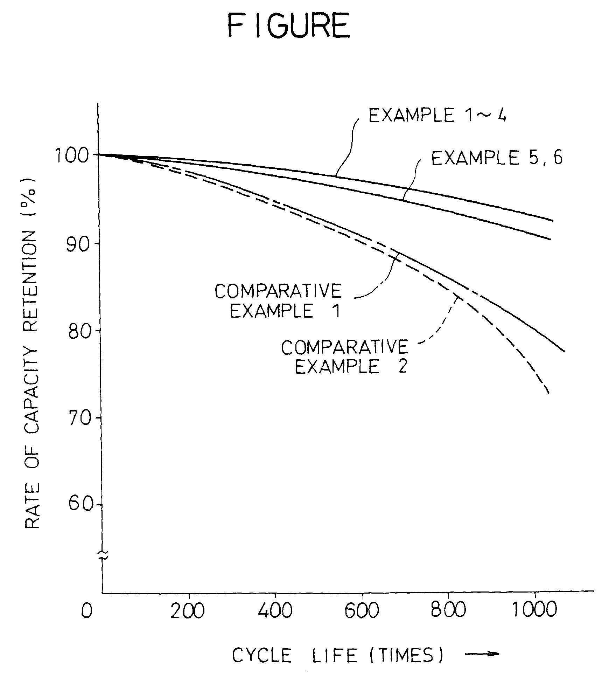

A cycle life test of each of thus assembled batteries was conducted at a temperature of 0 °C, in which one cycle consisted of charge with 900 mA for 1.5 hours, discharge with 900 mA up to the perfect discharge state showing battery voltage of 0V, and pause for 0.25 hours. For each cycle, discharge capacity relative to capacity before the test was measured, and capacity retention (%) was calculated by dividing the discharge capacity by the capacity before test. The results were shown in Fig. 1.

In the above mentioned cycle time test, after 1000 cycles of charge and discharge were finished, the battery was decomposed and the nickel electrode was pulled out to measure the weight thereof. From that measured weight and the weight before mounting in the battery, quantity of fallen active material was obtained. In Table 1, the quantity of fallen active material in each nickel electrode is expressed in a value relative to the quantity of fallen active material in the nickel electrode of Comparative Example 1, which is expressed as 1. In Table 1, capacity retention of each battery at the time when 1000 cycles of charge and discharge were finished is also given.

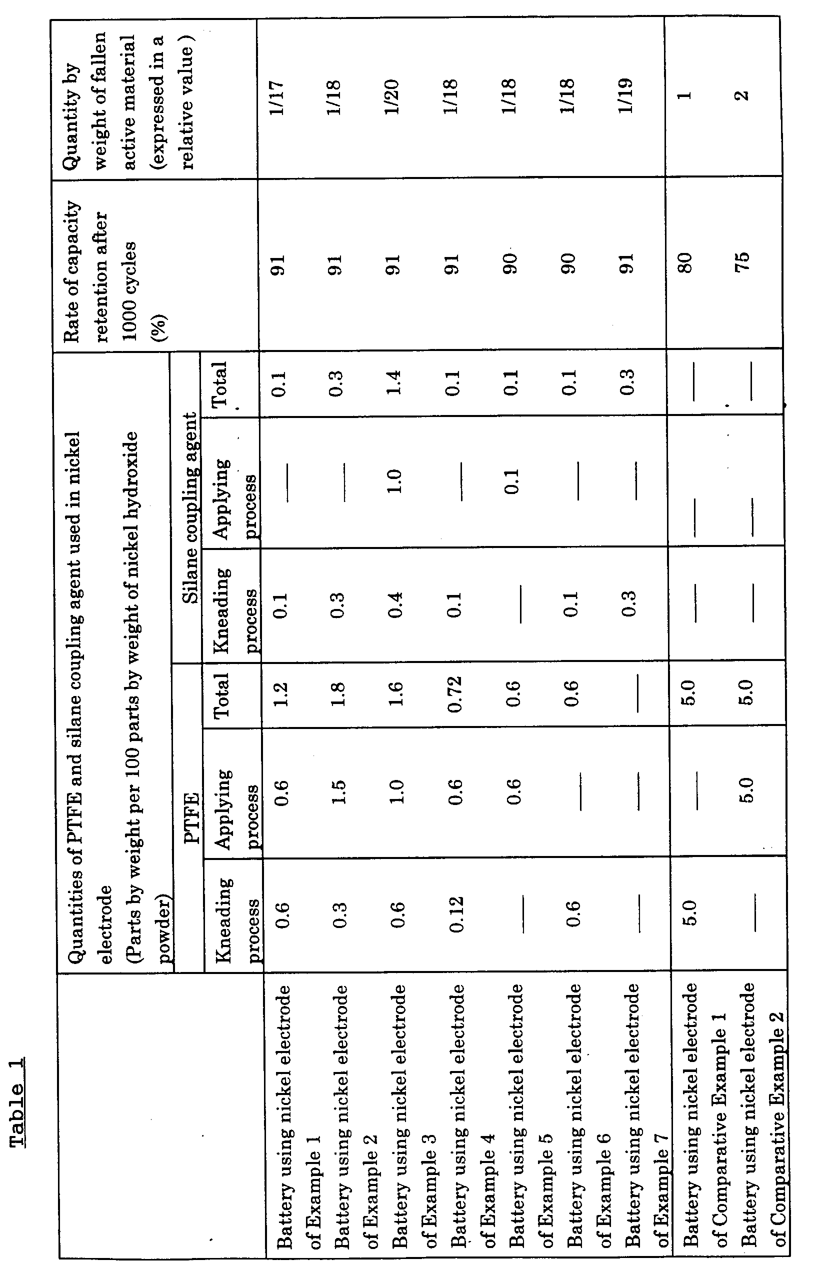

As clear from Fig. 1 and Table 1, in each example of nickel electrode according to the present invention, falling of active material is only produced in very small quantity even after 1000 cycles of charge and discharge test are performed, so that capacity retention of more than 90 % is ensured and good cycle life characteristics are shown.

On the other hand, in the comparative examples of nickel electrode, for example, in Comparative Example 1, even though a large quantity of PTFE is used, the quantity of fallen active material is 17 ∼ 48 times as much as that in the case of the examples of nickel electrode according to the present invention, and the cycle life characteristics deteriorate from an earlier stage.

Those are the effects of using silane coupling agent at the time of preparing the admixture paste in the examples of nickel electrode according to the present invention.

### Examples 8 ∼ 43 according to the present invention and Comparative Examples 3 ∼ 6

Examples of hydrogen absorbing alloy electrode for use as a first electrode according to the present invention were produced as follows.

### (1) Production of hydrogen absorbing alloy electrode

First, hydrogen absorbing alloys having the following compositions were prepared.
Alloy 1: MmNi_{3.2}Co_{1.0}Al_{0.2}Mn_{0.4} (where Mm represents misch metal)
Alloy 2: La_{0.8}Nd_{0.15}Zr_{0.05}Ni_{3.8}Co_{0.7}Al_{0.5}
Alloy 3: Zr_{1.0}Mn_{0.5}Cr_{0.2}V_{0.1}Ni_{1.2}
Alloy 4: Ti_{0.8}Zr_{0.2}Ni_{0.6}

Each of those hydrogen absorbing alloys was mechanically ground into powder having regular grains in an average grain size of approximately 65 µm. It is to be noted that grain shape of each powder is not spherical.

The following silane coupling agents were also prepared.
Coupling agent 1: γ-gricidoxypropyltrimethoxysilane
Coupling agent 2: methyltrimethoxysilane
Coupling agent 3: methyltriethoxysilane
Coupling agent 4: γ-(2-aminoethyl)-aminopropyltrimethoxysilane
Coupling agent 5: γ-anilinopropyltrimethoxysilane
Coupling agent 6: γ-mercaptpropyltrimethoxysilane
Coupling agent 7: vinyltriacetoxysilane
Coupling agent 8: methylchlorosilane
Coupling agent 9: (1H, 1H, 2H, 2H-heneicosafluorododecyle) trimethoxysilane

100 parts by weight of one of the aforementioned alloys, 5 parts by weight of one of the aforementioned silane coupling agent, 10 parts by weight of nickel powder having an average grain size of approximately 35 µm, 5 parts by weight of PTFE powder and 15 parts by weight of ion exchange water were mixed to prepare admixture paste of each kind.

Each prepared admixture paste was applied to both sides of a punching nickel sheet (open diameter: 1.5mm, rate of open area: 38 %, thickness: 0.07mm). Then, drying was performed at a temperature of 80 °C for 60 minutes, and rolling was thereafter performed with a pressure of 3 ton/cm². Thus, each example of hydrogen absorbing alloy electrode according to the present invention having a thickness of 0.35 mm was obtained.

On the other hand, comparative examples of hydrogen absorbing alloy electrode were produced under the same conditions as in the case of the aforementioned examples according to the present invention, except that silane coupling agent was not mixed to prepare admixture paste.

### (2) Assembling of battery

100 parts by weight of nickel hydroxide powder having a spherical shape and grain size distribution of 1 ∼ 200 µm and containing 7 % by weight of solid solution of zinc, 10 parts by weight of carbonyl nickel powder having grain size distribution of 0.5 ∼ 10 µm, 5 parts by weight of cobalt monoxide powder having grain size distribution of 0.5 ∼ 30 µm, 50 parts by weight of aqueous solution of carboxylmethylcellulose having a concentration of 2 % by weight (1 part by weight in terms of carboxylmethylcellulose) and 1 part by weight of suspension of PTFE having a concentration of 60 % by weight (0.6 part by weight in terms of PTFE powder, PTFE powder having a grain size of 0.1 ∼ 10 µm) were kneaded to prepare admixture paste.

The admixture paste was applied to permeate a sponge-like nickel sheet having a porosity of 95 %. Then drying was performed at a temperature of 150 °C for 20 minutes, and rolling was thereafter performed with a pressure of 4 ton/cm².

Thus obtained electrode plate was next dipped in 1 part by weight of suspension of PTFE having a concentration of 60 % by weight (0.6 parts by weight in terms of PTFE powder) and pulled up therefrom. Then drying was performed at a temperature of 120 ° C for 20 minutes, and rolling was thereafter performed with a pressure of 6 ton/cm², thereby obtaining a nickel electrode having a thickness of 0.7 mm.

The same separator as those used in Examples 1 ∼ 7 was interposed between that nickel electrode and one of the aforementioned hydrogen absorbing alloy electrodes, thereby to form a group of electrode. The group of electrode was placed in a nickel-plated stainless steel can, then electrolyte composed of 0.6 N NaOH, 1N LiOH and 7N KOH was poured in the can, and then the can was sealed. Thus a nickel-hydrogen secondary battery in square shape having rated capacity of 1200 mAh was assembled.

### (3) Investigation of characteristics of batteries

A cycle life test of each of thus assembled batteries was conducted at a temperature of 0 °C, in which one cycle consisted of charge with 1200 mA for 1.5 hours, discharge with 1200 mA for 1.25 hours in order to attain the perfect discharge state showing battery voltage of 0V, and pause for 0.25 hours. After 500 cycles were performed, discharge capacity was measured, and capacity retention (%) was calculated by dividing the discharge capacity by the capacity before the test. The results were shown in Tables 2 and 3.

In the above mentioned cycle life test, after 500 cycles were performed, the battery was decomposed and the hydrogen absorbing alloy electrode was pulled out to measure the weight thereof. From that measured weight and the weight before mounting in a battery, quantity of fallen hydrogen absorbing alloy powder was obtained. In Tables 2 and 3, the quantity of fallen hydrogen absorbing alloy powder in each hydrogen absorbing alloy electrode according to the present invention is expressed in a value relative to that in a relevant comparative example, which is expressed as 1.

**Table 2**

| | Kind of hydrogen absorbing alloy | Kind of silane coupling agent | Characteristics of battery | |
|---|---|---|---|---|
| | | | Rate of capacity Retention (%) | Quantity by weight of fallen hydrogen absorbing alloy powder (expressed in a relative value) |
| Example 8 | Alloy 1 | Silane coupling agent 1 | 88 | 1/3 |
| Example 9 | Alloy 1 | Silane coupling agent 2 | 89 | 1/3 |
| Example 10 | Alloy 1 | Silane coupling agent 3 | 90 | 1/4 |
| Example 11 | Alloy 1 | Silane coupling agent 4 | 80 | 2/3 |
| Example 12 | Alloy 1 | Silane coupling agent 5 | 81 | 2/3 |
| Example 13 | Alloy 1 | Silane coupling agent 6 | 80 | 2/3 |
| Example 14 | Alloy 1 | Silane coupling agent 7 | 85 | 1/2 |
| Example 15 | Alloy 1 | Silane coupling agent 8 | 80 | 2/3 |
| Example 16 | Alloy 1 | Silane coupling agent 9 | 93 | 1/5 |
| Comparative Example 3 | Alloy 1 | Not used. | 72 | 1 |
| Example 17 | Alloy 2 | Silane coupling agent 1 | 87 | 1/3 |
| Example 18 | Alloy 2 | Silane coupling agent 2 | 89 | 1/3 |
| Example 19 | Alloy 2 | Silane coupling agent 3 | 88 | 1/3 |
| Example 20 | Alloy 2 | Silane coupling agent 4 | 80 | 2/3 |
| Example 21 | Alloy 2 | Silane coupling agent 5 | 80 | 2/3 |
| Example 22 | Alloy 2 | Silane coupling agent 6 | 80 | 2/3 |
| Example 23 | Alloy 2 | Silane coupling agent 7 | 80 | 2/3 |
| Example 24 | Alloy 2 | Silane coupling agent 8 | 80 | 2/3 |
| Example 25 | Alloy 2 | Silane coupling agent 9 | 92 | 1/4 |
| Comparative Example 4 | Alloy 2 | Not used | 71 | 1 |

**Table 3**

| | Kind of hydrogen absorbing alloy | Kind of silane coupling agent | Characteristics of battery | |
|---|---|---|---|---|
| | | | Capacity Retention (%) | Quantity by weight of fallen hydrogen absorbing alloy powder (expressed in a relative value) |
| Example 26 | Alloy 3 | Silane coupling agent 1 | 87 | 1/3 |
| Example 27 | Alloy 3 | Silane coupling agent 2 | 88 | 1/3 |
| Example 28 | Alloy 3 | Silane coupling agent 3 | 89 | 1/3 |
| Example 29 | Alloy 3 | Silane coupling agent 4 | 80 | 2/3 |
| Example 30 | Alloy 3 | Silane coupling agent 5 | 80 | 2/3 |
| Example 31 | Alloy 3 | Silane coupling agent 6 | 80 | 2/3 |
| Example 32 | Alloy 3 | Silane coupling agent 7 | 84 | 1/2 |
| Example 33 | Alloy 3 | Silane coupling agent 8 | 80 | 2/3 |
| Example 34 | Alloy 3 | Silane coupling agent 9 | 92 | 1/4 |
| Comparative Example 5 | Alloy 3 | Not used. | 74 | 1 |
| Example 35 | Alloy 4 | Silane coupling agent 1 | 87 | 1/3 |
| Example 36 | Alloy 4 | Silane coupling agent 2 | 88 | 1/3 |
| Example 37 | Alloy 4 | Silane coupling agent 3 | 89 | 1/3 |
| Example 38 | Alloy 4 | Silane coupling agent 4 | 80 | 2/3 |
| Example 39 | Alloy 4 | Silane coupling agent 5 | 80 | 2/3 |
| Example 40 | Alloy 4 | Silane coupling agent 6 | 80 | 2/3 |
| Example 41 | Alloy 4 | Silane coupling agent 7 | 84 | 1/2 |
| Example 42 | Alloy 4 | Silane coupling agent 8 | 80 | 2/3 |
| Example 43 | Alloy 4 | Silane coupling agent 9 | 92 | 1/4 |
| Comparative Example 6 | Alloy 4 | Not used. | 71 | 1 |

As clear from Tables 2 and 3, regardless of kind of hydrogen absorbing alloy, the quantity of fallen hydrogen absorbing alloy powder in the examples in which silane coupling agent is mixed to prepare admixture paste is approximately 1/3 ∼ 2/3 of that in the examples in which no silane coupling agent is mixed. The former examples show higher capacity retention and better cycle life characteristics than the latter examples. Those are the effects of silane coupling agent, which mediates the bonding of hydrogen absorbing alloy powder and PTFE, thereby making the mutual bonding of grains of hydrogen absorbing alloy powder securer.

### Examples 44 ∼ 70 according to the present invention and Comparative Examples 7 ∼ 9

Examples of hydrogen absorbing alloy electrode were produced under the same production conditions as those in the case of the hydrogen absorbing alloy electrode used in Examples 1 ∼ 7, except that admixture pastes having compositions given in Tables 4 ∼ 6 were prepared, respectively. Batteries were assembled using those examples of hydrogen absorbing alloy electrode respectively, in the same way as in the case of Examples 1 ∼ 7, and characteristics of those batteries were investigated. The results were shown in Tables 4 ∼ 6.

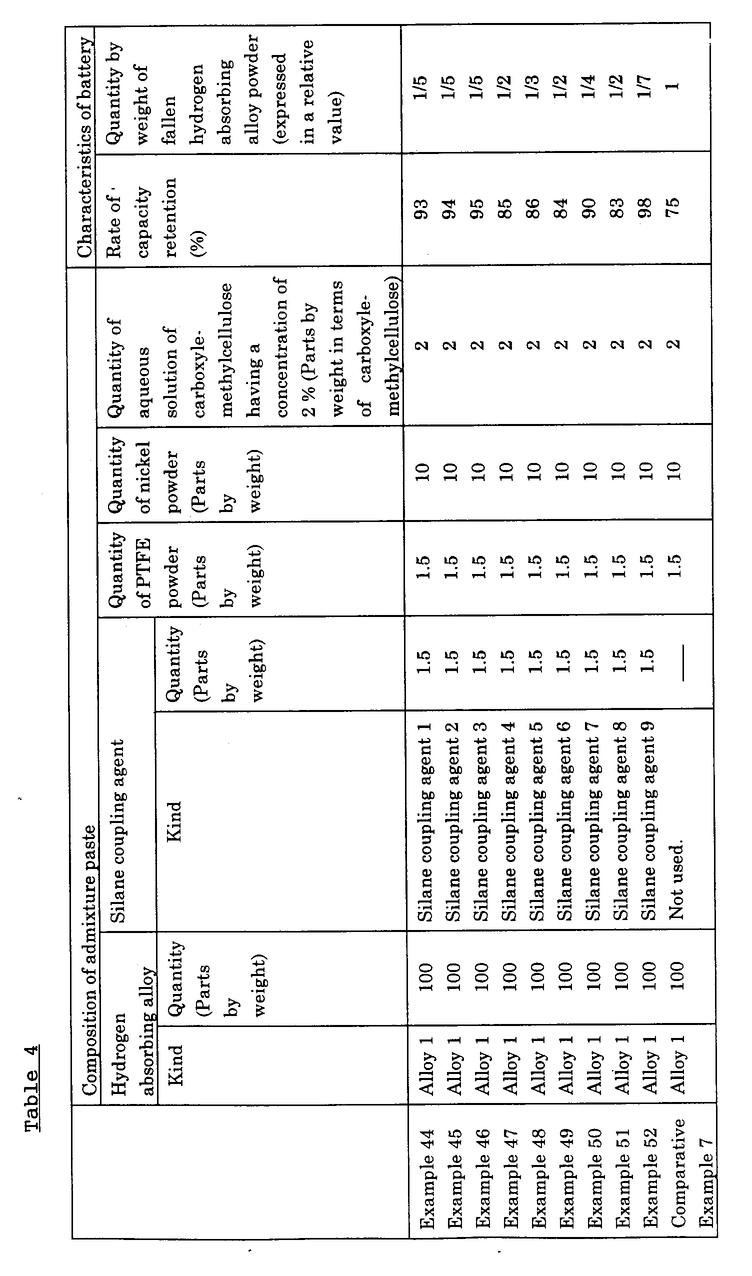

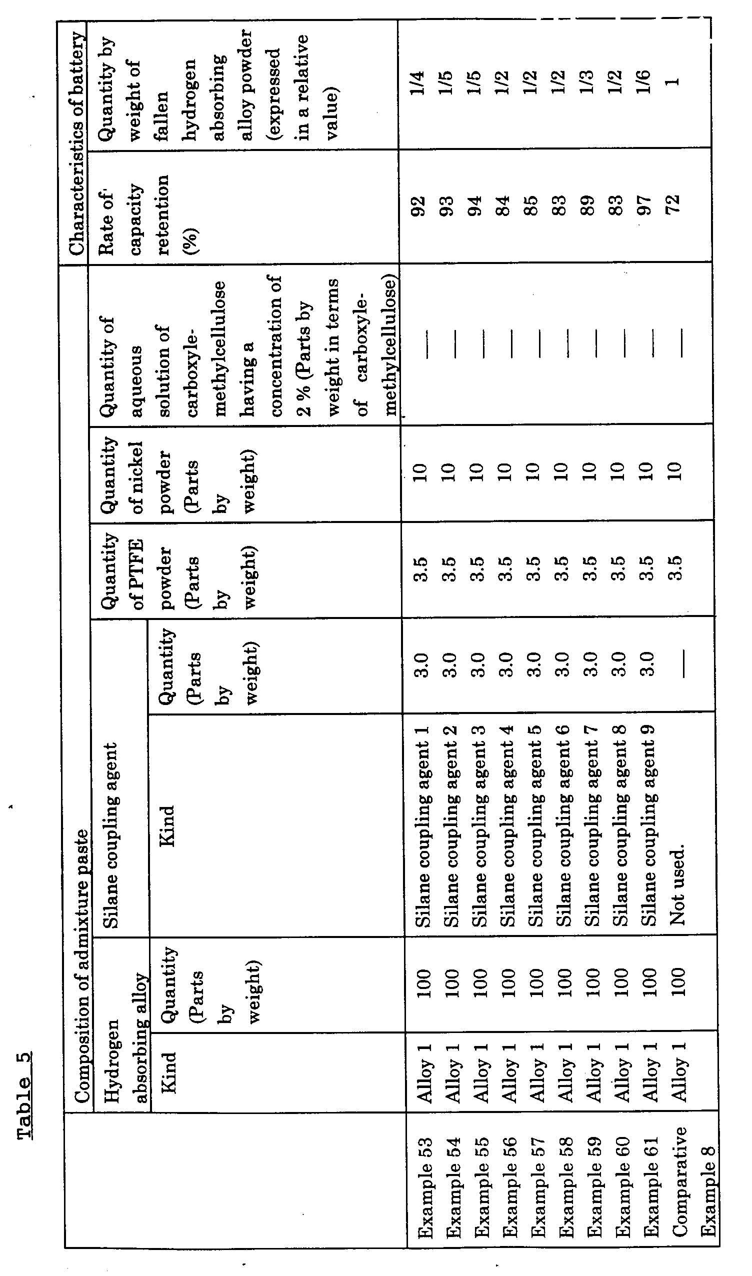

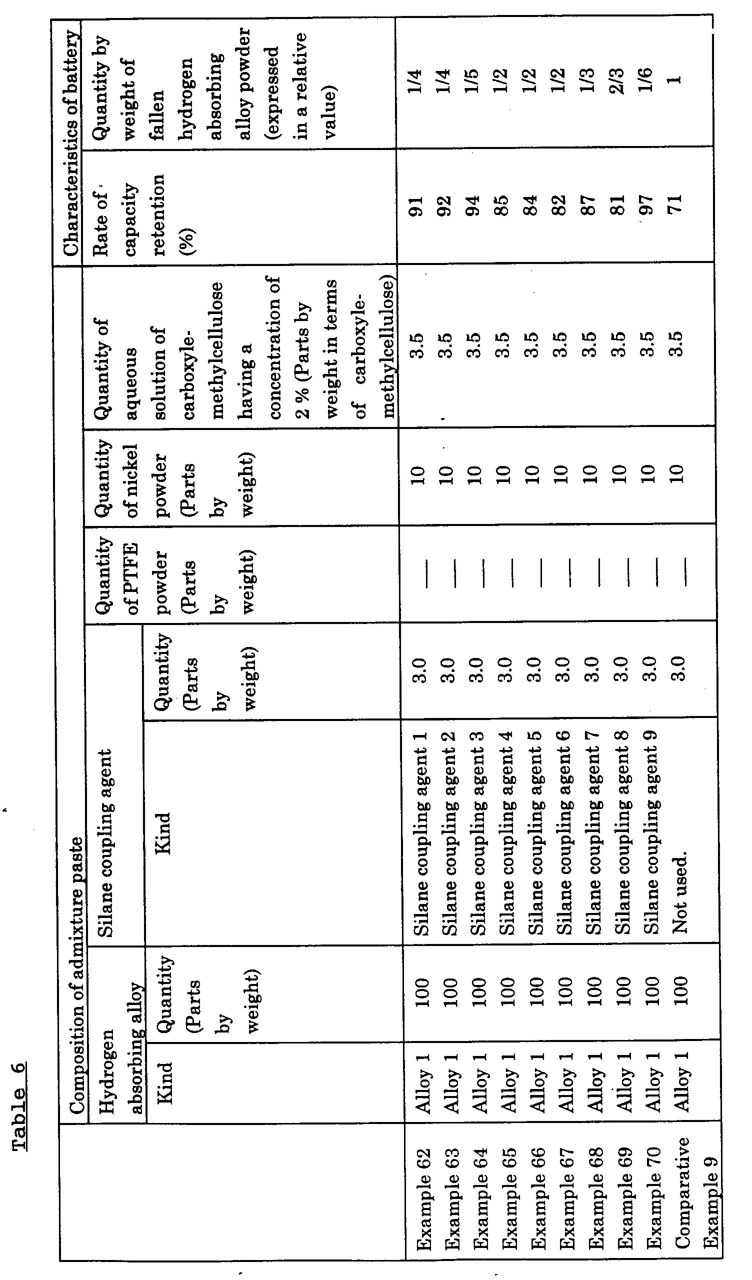

As clear from the comparison between the results given in Tables 4 ∼ 6 and those already given in Tables 2 and 3, when thickener (carboxylmethylcellulose) is further mixed at the time of preparing the admixture paste, dispersed state of binder is improved, that is, uniform dispersion of binder is produced. As a result, the mutual bonding of grains of the alloy powder in the hydrogen absorbing alloy electrode is further improved, capacity retention of battery is raised and cycle life characteristics are further improved.

### Examples 71 ∼ 81 according to the present invention and a Comparative Example 10

Powder of the aforementioned alloy 1 was produced by known water atomization. The powder has a spherical shape and an average grain size of approximately 20 µm.

Using thus produced alloy powder, pastes having compositions given in Table 7 were prepared, respectively. Examples of hydrogen absorbing alloy electrode were produced using those pastes respectively, in the same manner as in the case of Examples 1 ∼ 7. Then, batteries were assembled using those examples respectively, in the same way as in the case of Examples 1 ∼ 7, and characteristics of those batteries were investigated. The results were shown in Table 7.

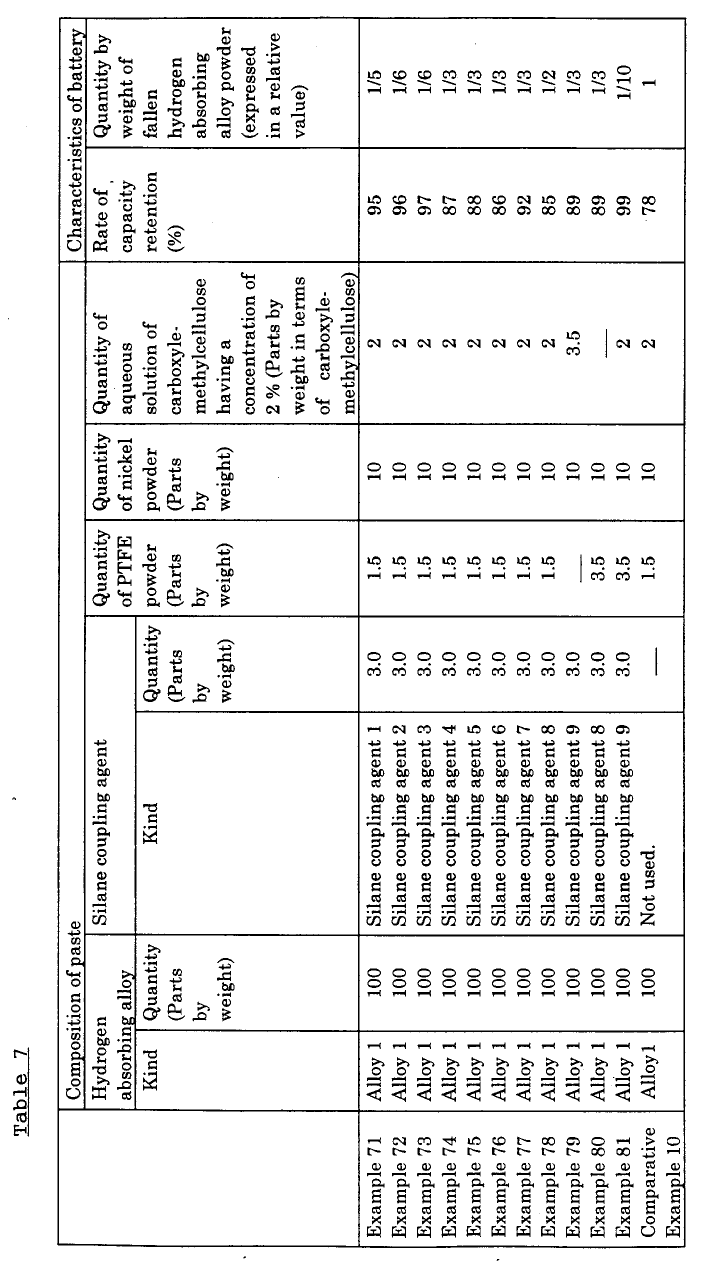

As clear from Table 7, when hydrogen absorbing alloy powder having a spherical shape is used, capacity retention is further improved.

### Examples 82 ∼ 89 according to the present invention and a Comparative Example 11

Examples of the second electrode of the present invention were produced as follows.

### (1) production of electrode

The following silane coupling agents were prepared.
Coupling agent 1: γ-gricidoxypropyltrimethoxysilane
Coupling agent 2: methyltrimethoxysilane
Coupling agent 3: methyltriethoxysilane
Coupling agent 4: γ-(2-aminoethyl) aminopropyltrimethoxysilane
Coupling agent 5: γ-anilinopropyltrimethoxysilane
Coupling agent 6: γ-mercaptpropyltrimethoxysilane
Coupling agent 7: vinyltriacetoxysilane
Coupling agent 8: methylchlorosilane

A foam nickel sheet having a porosity of 95 % by volume (thickness: 1.2mm) was prepared as a conductive substrate for positive electrode, and a punching nickel sheet (open diameter: 1.5mm, rate of open area: 38 %, thickness: 0.07mm) was prepared as a conductive substrate for negative electrode.

In each example according to the present invention, both of those conductive substrates were dipped in one of the aforementioned silane coupling agents for 10 seconds, then pulled out and dried, so that a film of silane coupling agent was formed on each surface of each conductive substrate.

The thickness of those films was found to be approximately 50 Å respectively, according to measurement using Auger spectroscopy analyzer.

100 parts by weight of nickel hydroxide powder having a spherical shape and grain size distribution of 1 ∼ 200 µm and containing 7 % by weight of solid solution of zinc, 10 parts by weight of carbonyl nickel powder having grain size distribution of 0.5 ∼ 10 µm, 5 parts by weight of cobalt monoxide powder having grain size distribution of 0.5 ∼ 30 µm, 50 parts by weight of aqueous solution of carboxylmethylcellulose having a concentration of 2 % by weight (1 part by weight in terms of carboxylmethylcellulose), and 3.3 parts by weight of suspension of PTFE having a concentration of 60 % by weight (2 parts by weight in terms of PTFE) were kneaded to prepare admixture paste for positive electrode.

On the other hand, MmNi_{3.2}Co_{1.0}Al_{0.2}Mn_{0.4} (where Mm represents misch metal) was mechanically ground into powder having regular grains in an average grain size of 65 µm. 100 parts by weight of this powder, 10 parts by weight of nickel powder, 50 parts by weight of aqueous solution of carboxylmethylcellulose having a concentration of 2 % by weight, and 3.3 parts by weight of suspension of PTFE having a concentration of 60 % by weight were kneaded to prepare admixture paste for negative electrode.

The aforementioned admixture paste for positive electrode was applied to permeate the aforementioned conductive substrate for positive electrode (foam nickel sheet) of each example, and then, drying and rolling were performed. The conductive substrate was then dipped in the aforementioned suspension of PTFE, and then, drying and rolling were performed again. Thus a nickel electrode having a thickness of 0.7 mm was obtained in each example.

On the other hand, the aforementioned admixture paste for negative electrode was applied to the conductive substrate for negative electrode (punching nickel sheet) of each example, and then, drying and rolling were performed, so that a hydrogen absorbing alloy electrode having a thickness of 0.35 mm was obtained in each example.

Further, for a comparative example, a nickel electrode and a hydrogen absorbing alloy electrode were produced in the same way as in the case of the aforementioned examples according to the present invention, except that conductive substrates of those electrodes were not treated with silane coupling agent.

### (2) Assembling of battery

In each example, the same separator as those used in Examples 1 ∼ 7 was interposed between the aforementioned nickel electrode and the aforementioned hydrogen absorbing alloy electrode, thereby to form a group of electrode. The group of electrode was placed in a nickel-plated stainless steel can, then electrolyte composed of 0.6 N NaOH, 1N LiOH and 7N KOH was poured in the can, and then the can was sealed. Thus each example of nickel-hydrogen secondary battery in cylindrical shape having rated capacity of 1300 mAh was assembled.

### (3) Investigation of characteristics of batteries

A cycle life test of each of thus assembled batteries was conducted at a temperature of 20 ∼ 25 °C, in which one cycle consisted of charge with 1300 mA for 1.5 hours, discharge with 1300 mA for 1.25 hours in order to attain the discharge state with final discharge voltage of 1V, and pause for 0.25 hours. After 500 cycles were performed, discharge capacity was measured, and capacity retention (%) was calculated by dividing the discharge capacity by the capacity before the test.

Further, after each battery was left at room temperature for 0.5 hours subsequently to charge, internal resistance of each battery was measured by alternating current with 1000 Hz and expressed in a value relative to that of the battery of comparative example, which was expressed as 1.

Furthermore, in the above mentioned cycle life test, after 500 cycles were performed, each battery was decomposed and the nickel electrode and the hydrogen absorbing alloy electrode thereof were pulled out to observe with the eyes the flaking state of each admixture for electrode.

The results were summarized in Table 8.

**Table 8**

| | Kind of used silane coupling agent | Characteristics of battery | | |
|---|---|---|---|---|
| | | Rate of capacity retention (%) | Flaking state of admixture for electrode in positive and negative electrodes | Internal resistance (expressed in a relative value) |
| Example 82 | Silane coupling agent 1 | 81 | No flaking. | 1.11 |
| Example 83 | Silane coupling agent 2 | 83 | No flaking. | 1.11 |
| Example 84 | Silane coupling agent 3 | 85 | No flaking. | 1.12 |
| Example 85 | Silane coupling agent 4 | 74 | No flaking. | 1.11 |
| Example 86 | Silane coupling agent 5 | 78 | No flaking. | 1.11 |
| Example 87 | Silane coupling agent 6 | 77 | No flaking. | 1.12 |
| Example 88 | Silane coupling agent 7 | 73 | No flaking. | 1.11 |
| Example 89 | Silane coupling agent 8 | 74 | No flaking. | 1.11 |
| Comparative Example 11 | Not used. | 73 | Flaking | 1 |

As clear from Table 8, batteries using the examples of electrode according to the present invention, in which the surfaces of conductive substrates are coated with silane coupling agent, do not show the flaking of admixture for electrode even after charge and discharge cycle test, and show relatively high values of capacity retention.

### Examples 90 ∼ 98 according to the present invention

As silane coupling agent, the aforementioned silane coupling agent 1 was chosen. The same foam nickel sheet and the same punching nickel sheet as those used in Examples 82 ∼ 89 were dipped for 10 seconds in the silane coupling agent 1, of which a concentration was varied for each example, and then pulled out and dried.

The thickness of film of silane coupling agent 1 formed in each example was measured using Auger spectroscopy analyzer. The results of measurement are shown in Table 9.

Next, in the same way as in the case of Examples 82 ∼ 89, nickel electrodes and hydrogen absorbing alloy electrodes were produced, batteries were assembled using those electrodes, and characteristics of those batteries were investigated. The results are shown in Table 9.

**Table 9**

| | Thickness of film of silane coupling agent 1 (Å) | Characteristics of battery | | |
|---|---|---|---|---|
| | | Rate of capacity retention (%) | Flaking state of admixture for electrode in positive and negative electrodes | Internal resistance (expressed in a relative value) |
| Example 90 | 5 | 70 | Small flaking in part. | 1 |
| Example 91 | 10 | 78 | No flaking. | 1.05 |
| Example 92 | 50 | 81 | No flaking. | 1.11 |
| Example 93 | 80 | 81 | No flaking. | 1.12 |
| Example 94 | 100 | 81 | No flaking. | 1.13 |
| Example 95 | 150 | 81 | No flaking. | 1.15 |
| Example 96 | 200 | 81 | No flaking. | 1.20 |
| Example 97 | 300 | 81 | No flaking. | 1.25 |
| Example 98 | 400 | 81 | No flaking | 1.54 |
| | | | | (An initial value exceeded 25 mΩ.) |

As clear from Table 9, in order to prevent the flaking of admixture for electrode, it is desirable to increase the thickness of film of silane coupling agent 1. However, as that thickness of film increases, the internal resistance of battery increases, and for example, when the thickness is 400 Å, the initial value of internal resistance of battery exceeds 25 mΩ. Thus, it is desirable that the thickness of film is 10 ∼ 300 Å.

### Examples 99 ∼ 106 according to the present invention

Admixture pastes for positive electrode were prepared in the same way as in the case of Examples 82 ∼ 89, except that 1.65 parts by weight of suspension of PTFE and 1.65 parts of the same silane coupling agent as that used to coat the surfaces of foam nickel sheet of each example were both added to prepare each admixture paste for positive electrode in place of 3.3 parts by weight of suspension of PTFE. Admixture pastes for negative electrode were also prepared in the same way, each containing both PTFE and silane coupling agent.

In the same way as in the case of Examples 82 ∼ 89, nickel electrodes and hydrogen absorbing alloy electrodes were produced using those admixture pastes, batteries were assembled using those electrodes, and characteristics of those batteries were investigated. The results are shown in Table 10.

**Table 10**

| | Kind of used silane coupling agent | Characteristics of battery | | |
|---|---|---|---|---|
| | | Rate of capacity retention (%) | Flaking state of admixture for electrode in positive and negative electrodes | Internal resistance (expressed in a relative value) |
| Example 99 | Silane coupling agent 1 | 91 | No flaking. | 1.11 |
| Example 100 | Silane coupling agent 2 | 92 | No flaking. | 1.11 |
| Example 101 | Silane coupling agent 3 | 93 | No flaking. | 1.12 |
| Example 102 | Silane coupling agent 4 | 84 | No flaking. | 1.11 |
| Example 103 | Silane coupling agent 5 | 85 | No flaking. | 1.12 |
| Example 104 | Silane coupling agent 6 | 83 | No flaking. | 1.11 |
| Example 105 | Silane coupling agent 7 | 89 | No flaking. | 1.11 |
| Example 106 | Silane coupling agent 8 | 82 | No flaking. | 1.12 |
| Comparative Example 11 | Not used. | 73 | Flaking | 1 |

As clear from comparison between the aforementioned Table 8 and Table 10, when silane coupling agent is also added to the admixture paste as in the case of Examples 99 ∼ 106, not only the flaking of admixture for electrode is likewise prevented, but also the capacity retention and the cycle life characteristics are further improved as compared with the case in which silane coupling agent is only used to coat the surfaces of conductive plates.

### Examples 107 ∼ 110 according to the present invention

In Example 107, (1H, 1H, 2H, 2H-heneicosafluorododecyl) trimethoxysilane was used as silane coupling agent, and a nickel electrode and a hydrogen absorbing alloy electrode were produced in the same way as in Example 82. Then, a battery was assembled using those electrodes in the same way in Example 82, and characteristics of that battery were investigated.

In Example 108, the aforementioned silane coupling agent was also added to the admixture paste, and a nickel electrode and a hydrogen absorbing alloy electrode were produced in the same way as in Example 99. Characteristics of a battery using those electrodes were investigated.

In Example 109, approximately the same quantities of the aforementioned silane coupling agent 1 and the suspension of PTFE were mixed, and conductive substrates were coated with that admixture in the same way as in Example 82. A battery was assembled in the same way as in Example 82, and characteristics of that battery were investigated.

In Example 110, the aforementioned silane coupling agent 1 was also added to the admixture paste, and a nickel electrode and a hydrogen absorbing alloy electrode were produced in the same way as in Example 99 using that admixture paste and the same conductive substrates as used in Example 99. Characteristics of a battery using those electrodes were investigated.

The results of investigations are shown in Table 11.

**Table 11**

| | Characteristics of battery | | |
|---|---|---|---|
| | Rate of capacity retention (%) | Flaking state of admixture for electrode in positive and negative electrodes | Internal resistance (expressed in a relative value) |
| Example 107 | 90 | No flaking. | 1.11 |
| Example 108 | 97 | No flaking. | 1.11 |
| Example 109 | 83 | No flaking. | 1.12 |
| Example 110 | 93 | No flaking. | 1.12 |

### Industrial Applicability

In the electrode for battery according to the present invention, powdered active material such as nickel hydroxide powder and hydrogen absorbing alloy powder, which is a main constituent of admixture for electrode carried on a conductive substrate, is not liable to fall off during charge and discharge cycle, nor is the mixture for electrode liable to flake off the conductive substrate. Therefore, a battery using the electrode of the present invention can exhibit high capacity retention even when charge and discharge are performed for a long time, and has high cycle life characteristics.

## Claims

1. An electrode for battery comprising:
admixture for electrode, which is an admixture of powdered active material and binder, carried on a conductive substrate;
grains of said powdered active material being mutually bonded by said binder, wherein
said binder contains at least silane coupling agent.

2. An electrode for battery according to claim 1, wherein said binder comprises fluoroplastics and silane coupling agent.

3. An electrode for battery according to claim 1, wherein said silane coupling agent is fluorine-contained silane coupling agent.

4. An electrode for battery according to claim 1, wherein said powdered active material is nickel hydroxide powder, said binder comprises both fluoroplastics and silane coupling agent, and said electrode for battery is a nickel electrode.

5. An electrode for battery according to claim 4, wherein said silane coupling agent is epoxy-contained silane coupling agent.

6. An electrode for battery according to claim 1, wherein said powdered active material is hydrogen absorbing alloy powder, said binder comprises silane coupling agent and water repellent agent and/or thickener, and said electrode for battery is a hydrogen absorbing alloy electrode.

7. An electrode for battery according to claim 6, wherein said silane coupling agent is fluorine-contained silane coupling agent.

8. An electrode for battery comprising:
admixture for electrode, which is an admixture of powdered active material and thickener and/or binder, carried on a conductive substrate;
grains of said powdered active material being mutually bonded by said thickner and/or binder, wherein
a film of silane coupling agent is formed on the surface of said conductive substrate.

9. An electrode for battery according to claim 8, wherein said binder contains at least silane coupling agent.
